(19) Europäisches Patentamt
European Patent Office
Office européen des brevets

(11) **EP 2 146 825 B1**

(12) **EUROPÄISCHE PATENTSCHRIFT**

(45) Veröffentlichungstag und Bekanntmachung des Hinweises auf die Patenterteilung:
**09.02.2011   Patentblatt 2011/06**

(21) Anmeldenummer: **08749382.1**

(22) Anmeldetag: **07.05.2008**

(51) Int Cl.:
**B25J 9/16** $^{(2006.01)}$

(86) Internationale Anmeldenummer:
**PCT/EP2008/003674**

(87) Internationale Veröffentlichungsnummer:
**WO 2008/141730 (27.11.2008 Gazette 2008/48)**

(54) **BEWEGUNGSSTEUERUNG FÜR ELASTISCHE ROBOTERSTRUKTUREN**

MOVEMENT CONTROLLER FOR ELASTIC ROBOT STRUCTURES

COMMANDE DE MOUVEMENTS POUR ROBOTS À STRUCTURE ÉLASTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.05.2007   DE 102007024143**

(43) Veröffentlichungstag der Anmeldung:
**27.01.2010   Patentblatt 2010/04**

(73) Patentinhaber: **Dürr Systems GmbH**
**74321 Bietigheim-Bissingen (DE)**

(72) Erfinder:
• **HÄCKER, Jens**
  **71706 Markgröningen (DE)**
• **SCHOELL, Björn**
  **71679 Asperg (DE)**
• **MEISSNER, Alexander**
  **70193 Stuttgart (DE)**

(74) Vertreter: **Beier, Ralph**
**v. Bezold & Partner**
**Akademiestrasse 7**
**80799 München (DE)**

(56) Entgegenhaltungen:
**WO-A-2006/056349**

• **WELLS R L ED - INSTITUTE OF ELECTRICAL AND ELECTRONICS ENGINEERS: "A study of path errors due to servo dynamics and link flexibilities in a two-coordinate robotic manipulator" PROCEEDINGS OF THE INTERNATIONAL CONFERENCE ON SYSTEMS, MAN AND CYBERNETICS. LE TOUQUET, OCT. 17 - 20, 1993; [PROCEEDINGS OF THE INTERNATIONAL CONFERENCE ON SYSTEMS, MAN AND CYBERNETICS], NEW YORK, IEEE, US, Bd. -, 17. Oktober 1993 (1993-10-17), Seiten 705-709, XP010132341 ISBN: 978-0-7803-0911-1**
• **ENGENE TUNG ET AL: "Low velocity friction compensation and feedforward solution based on repetitive control" 19910601, 1. Juni 1991 (1991-06-01), Seiten 2615-2620, XP031108188**

**Beschreibung**

Die Erfindung betrifft ein Steuerungsverfahren für einen mehrachsigen Roboter, insbesondere für einen Lakkierroboter, gemäß dem Hauptanspruch.

Aus DE 103 42 471 A1 ist eine Robotersteuerung für einen mehrachsigen Lackierroboter bekannt, die einen Tool Center Point (TCP) entlang einer vorgegebenen Roboterbahn bewegt. Diese bekannte Robotersteuerung kann mechanische Elastizitäten der einzelnen Roboterachsen berücksichtigen und ausgleichen, um die Positionierungsgenauigkeit des Lackierroboters zu verbessern. Hierbei werden die einzelnen Roboterachsen des Lackierroboters durch jeweils einen Achsregler angesteuert, wobei die mechanische Elastizität des Lackierroboters dadurch berücksichtigt wird, dass die Regelabweichung des Achsreglers einer relativ nachgiebigen Roboterachse im Rahmen einer achsenübergreifenden Koppelung auf einen Achsregler einer relativ steifen Achse wirkt.

Diese bekannte Robotersteuerung hat sich bereits als vorteilhaft erwiesen, jedoch ist es insbesondere bei hochdynamischen Roboterbewegungen wünschenswert, mechanische Elastizitäten des Lackierroboters noch besser zu berücksichtigen und zu kompensieren, um die Positionierungsgenauigkeit zu erhöhen.

Aus US 2004/0093119 A1 ist eine Robotersteuerung bekannt, die reibungsbedingte Positionierungsfehler des Roboters bei der Antriebsregelung in den einzelnen Roboterachsen korrigiert, wobei die vorgegebene Roboterbahn jedoch nicht verändert wird. Die Positionierungsgenauigkeit des Roboters wird deshalb durch diese Robotersteuerung nicht in ausreichendem Maß verbessert, was insbesondere für einen hochdynamischen Betrieb des Roboters gilt.

Ferner ist zum Stand der Technik noch hinzuweisen auf DE 10 2004 056 861 A1; "Proceedings of the 2005 IEEE Conference on Control Algorithms", August 28-31, 2005, S. 1170-1175; "Proceedings of IFAC Symposium on Robot Control", September 19-21, 1994, S. 485-490; DE 698 29 559 T2; DE 10 2004 008 406 A1; "Proceedings of the 1992 IEEE Conference on Robotics and Automation", May 1992, S. 1429-1435; "IEEE Transactions on Control Systems Technology", Vol. 12, No. 6, November 2004, S. 904-919 and EP 1 173 801 B1. Auch bei diesem Stand der Technik ist die Positionierungsgenauigkeit des Roboters jedoch unbefriedigend.

Schließlich ist aus Robert Lindsay Wells: "A Study of Path Errors Due to Servo Dynamics and Link Flexibilities in a Two-Coordinate Robotic Manipulator", Proceedings of the 1993 international conference on systems, man and cybernetics, New York, IEEE, US, Band 17, Seiten 705-709 ein Steuerungsverfahren für einen Roboter gemäß dem Oberbegriff des Hauptanspruchs bekannt. Dieses bekannte Steuerungsverfahren berücksichtigt jedoch keine inneren und äußeren Drehmomentwerte.

Der Erfindung liegt deshalb die Aufgabe zugrunde, ein Steuerungsverfahren für einen mehrachsigen Roboter anzugeben, das Elastizitäten des Roboters möglichst gut kompensiert, um die Positionierungsgenauigkeit des Roboters zu verbessern.

Diese Aufgabe wird durch ein erfindungsgemäßes Steuerungsverfahren gemäß dem Hauptanspruch gelöst.

Die Erfindung umfasst die allgemeine technische Lehre, bei der Steuerung eines mehrachsigen Roboters entlang einer vorgegebenen Roboterbahn Bahnkorrekturwerte zu berechnen, die Elastizität, Reibung und/oder Trägheit des Roboters berücksichtigen, so dass die Ansteuerung des Roboters mit einer entsprechend korrigierten Roboterbahn die dynamischen Positionierungsfehler (z.B. Überschwingen, elastische Verbiegung der Roboterachsen) kompensiert.

Im Rahmen des erfindungsgemäßen Steuerungsverfahrens wird für einen Referenzpunkt des Roboters, wie beispielsweise den sogenannten Tool Center Point (TCP), eine Roboterbahn durch mehrere Bahnpunkte vorgegeben, die von dem Referenzpunkt durchfahren werden sollen. Die einzelnen Bahnpunkte auf der Roboterbahn werden hierbei vorzugsweise durch Raumkoordinaten definiert, welche die Position der einzelnen Bahnpunkte in den drei Raumrichtungen festlegen. Beispielsweise kann für jeden Bahnpunkt ein Koordinatensatz oder Positionsvektor mit drei Koordinaten vorgegeben werden, die die Position des jeweiligen Bahnpunkts in einem dreidimensionalen kartesischen Koordinatensystem angeben.

Die Raumkoordinaten der einzelnen Bahnpunkte der vorgegebenen Roboterbahn werden dann im Rahmen des erfindungsgemäßen Steuerungsverfahrens in herkömmlicher Weise gemäß einer inversen Roboterkinematik in entsprechende Achsenkoordinaten umgerechnet, wobei die Achsenkoordinaten die Stellung der einzelnen Roboterachsen in den jeweiligen Bahnpunkten wiedergeben. Die Umrechnung der Raumkoordinaten gemäß der inversen Roboterkinematik in die entsprechenden Achsenkoordinaten ist an sich aus dem Stand der Technik bekannt und muss deshalb nicht weiter beschrieben werden. Die umgerechneten Achsenkoordinaten der einzelnen Bahnpunkte liegen dann vorzugsweise als Positionsvektor in einem Achsenkoordinatensystem vor.

Die umgerechneten Achsenkoordinaten der einzelnen Bahnpunkte dienen dann zur Ansteuerung von achsenbezogenen Reglern für die einzelnen Roboterachsen, was an sich ebenfalls aus dem Stand der Technik bekannt ist, wie beispielsweise aus der bereits eingangs zitierten Patentanmeldung DE 103 42 471 A1.

Die achsenbezogenen Regler für die einzelnen Roboterachsen steuern dann die Antriebsmotoren in den einzelnen Roboterachsen so an, dass der Referenzpunkt (z.B. der Tool Center Point) nacheinander die einzelnen Bahnpunkte der vorgegebenen Roboterbahn durchfährt.

Die Erfindung sieht nun zusätzlich zu den vorstehend beschriebenen herkömmlichen Verfahrensschritten vor, dass für die einzelnen Bahnpunkte auf der Roboterbahn Bahnkorrekturwerte gemäß einem dynamischen Robotermodell berechnet werden, wobei die Bahnkorrekturwerte Elastizität, Reibung und/oder Trägheit des Roboters berücksichtigen und dadurch eine Kompensation dynamischer Positionierungsfehler ermöglichen.

Die Bahnkorrekturwerte dienen dann zur Berechnung von korrigierten Achsenkoordinaten für die einzelnen Bahnpunkte der vorgegebenen Roboterbahn. Vorzugsweise werden die Bahnkorrekturwerte zur Berechnung der korrigierten Achsenkoordinaten einfach zu den unkorrigierten Achsenkoordinaten der jeweiligen Bahnpunkte addiert, so dass die Bahnkorrekturwerte einen Offset bilden.

Schließlich werden die einzelnen achsenbezogenen Regler dann mit den korrigierten Achsenkoordinaten angesteuert, wodurch die dynamischen Positionierungsfehler kompensiert werden.

In einem bevorzugten Ausführungsbeispiel der Erfindung ist ein dynamisches Robotermodell vorgesehen, um die sogenannten inneren Kräfte und Drehmomente für die bewegten Massen des Roboters zu berechnen, wobei die Berechnung vorzugsweise in Echtzeit ("Online") entsprechend einem Starrkörpermodell erfolgt.

Hierbei sieht das erfindungsgemäße Steuerungsverfahren vorzugsweise vor, dass aus den unkorrigierten Achsenkoordinaten der einzelnen Bahnpunkte gemäß dem dynamischen Robotermodell innere Drehmomentwerte berechnet werden, wobei die inneren Drehmomentwerte das innere Drehmoment der Antriebsmotoren und der zugehörigen Roboterachsen wiedergeben. Beispielsweise können die so berechneten inneren Drehmomentwerte einen statischen Reibanteil, einen viskosen Reibanteil und/oder die Massenträgheit des Antriebsstrangs der einzelnen Roboterachsen berücksichtigen, wie noch detailliert beschrieben wird.

Bei diesem Ausführungsbeispiel der Erfindung werden die Bahnkorrekturwerte dann vorzugsweise aus den inneren Drehmomenten und den bekannten äußeren Drehmomenten berechnet, wobei vorzugsweise die Elastizität der einzelnen Roboterachsen berücksichtigt wird, indem die einzelnen Roboterachsen im einfachsten Fall als elastische Drehfeder nullter Ordnung betrachtet werden. Die Bahnkorrekturwerte ergeben sich dann entsprechend einem linearem Zusammenhang aus einer vorgegebenen Drehfederkonstanten und den Gesamtmomenten als Summe aus den inneren Drehmomenten und den äußeren Drehmomenten.

Im Rahmen der Erfindung können die inneren Drehmomentwerte einen statischen Reibungsterm $M_{fric,stat}$ enthalten, der eine geschwindigkeitsunabhängige Reibung wiedergibt, die in Drehrichtung des jeweiligen Antriebsmotors wirkt und beispielsweise aus dem Vorzeichen der ersten zeitlichen Ableitung der unkorrigierten Achsenkoordinaten der Bahnpunkte und einer vorgegebenen statischen Reibungskonstanten berechnet werden kann. Der statische Reibungsterm $M_{fric,stat}$ lässt sich hierbei nach folgender Formel aus der statischen Reibungskonstanten $f_i^{sta}$ und den unkorrigierten Achsenkoordinaten $q_i$ berechnen, wobei der Index i die jeweilige Roboterachse angibt:

$$M_{fric,stat,i} = f_i^{sta} \cdot sgn\ (\dot{q}_i).$$

Weiterhin umfassen die im Rahmen des dynamischen Robotermodells berechneten inneren Drehmomentwerte vorzugsweise einen dynamischen Reibungsterm $M_{fric,dyn}$, wobei es sich um einen linearen Term handelt, der proportional zur Drehgeschwindigkeit des jeweiligen Antriebsmotors wirkt. Beispielsweise kann der dynamische Reibungsterm nach folgender Formel aus einer dynamischen Reibungskonstanten $f_i^{vis}$ und der ersten zeitlichen Ableitung $\dot{q}_i$ der unkorrigierten Achsenkoordinaten der Bahnpunkte berechnet werden:

$$M_{fric,dyn,i} = f_i^{vis} \cdot \dot{q}_i$$

Schließlich umfassen die im Rahmen des dynamischen Robotermodells berechneten inneren Drehmomentwerte vorzugsweise auch einen Trägheitsterm $M_{inert}$, der die mechanische Trägheit des Antriebsstrangs der jeweiligen Roboterachse wiedergibt und proportional zur Drehbeschleunigung des jeweiligen Antriebsmotors ist. Der Trägheitsterm $M_{inert}$ kann hierbei aus der zweiten zeitlichen Ableitung $\ddot{q}_i$ der unkorrigierten Achsenkoordinaten der Bahnpunkte und einer Trägheitskonstante $J_i$ nach folgender Formel berechnet werden:

$$M_{inert} = J_i \cdot \ddot{q}_i.$$

In einem bevorzugten Ausführungsbeispiel der Erfindung wird die Temperaturabhängigkeit der vorstehend erwähnten Reibungsterme berücksichtigt. Hierzu wird im Rahmen des erfindungsgemäßen Steuerungsverfahrens die Umgebungstemperatur gemessen, wobei die Modellparameter (z.B. die statische Reibungskonstante, die dynamische Reibungskonstante und die Trägheitskonstante) dann in Abhängigkeit von der gemessenen Temperatur aus einem Parameterspeicher ausgelesen werden. Die Bahnkorrekturwerte werden dann mit den ausgelesenen Modellparametern des dynamischen Robotermodells berechnet, also unter Berücksichtigung der aktuellen Temperatur. Diese Temperaturanpassung der Modellparameter des dynamischen Robotermodells bietet den Vorteil, dass Temperaturabhängigkeiten des mechanischen Roboterverhaltens im Rahmen des erfindungsgemäßen Steuerungsverfahrens berücksichtigt werden können.

Die "inneren" Parameter $f_i^{sta}$, $f_i^{vis}$ und $J_i$ werden vorzugsweise für jede Achse experimentell durch ein spezielles Fahrprogramm des Roboters und ein Optimierungsverfahren ermittelt. Während dieser Fahrt werden dabei die auftretenden Motormomente von den Antrieben gelesen und gleichzeitig werden die Motormomente berechnet, welche sich rein durch die Massen des Roboters ergeben. Aus der jeweils resultierenden Momentendifferenz werden über ein "Least Squares Verfahren" die inneren Parameter berechnet. Der ermittelte Parametersatz gilt für die aktuelle Temperatur des Motor/Getriebe-Strangs der jeweiligen Achse. Die Betriebstemperatur des Roboters wird in diskrete Schritte unterteilt. Der Roboter wird sukzessive durch Fahren erwärmt. Nach Erreichen des jeweils nächsten Temperaturniveaus wird das o.g. Identifikationsverfahren zur Ermittlung der Parameter $f_i^{sta}$, $f_i^{vis}$ und $J_i$ durchgeführt und gleichzeitig die zugehörige Temperatur gespeichert. So erhält man für jede Achse für jeden Temperaturschritt den zugehörigen Parametersatz. Im Betrieb später wird zyklisch für jede Achse der aktuelle Temperaturwert ausgelesen und daraufhin der dazugehörige Parametersatz online gesetzt.

Nach der vorstehend beschriebenen Berechnung der inneren Drehmomentwerte entsprechend dem dynamischen Robotermodell werden die Bahnkorrekturwerte dann - wie bereits vorstehend erwähnt - aus den inneren Drehmomentwerten und den bekannten äußeren Drehmomentwerten berechnet, wobei diese Berechnung im einfachsten Fall entsprechend einem einfachen Zusammenhang zwischen Drehmoment und Drehwinkel erfolgen kann, wenn man als Modell für die einzelnen Roboterachsen jeweils eine elastische Drehfeder nullter Ordnung zugrunde legt. Vorzugsweise werden die Bahnkorrekturwerte jedoch mittels eines P-Glieds, eines PT1-Glieds und/oder eines PT2-Glieds aus den inneren Drehmomentwerten berechnet, was eine optimale Modellierung ermöglicht.

In dem bevorzugten Ausführungsbeispiel der Erfindung werden die mit den Bahnkorrekturwerten korrigierten Achsenkoordinaten der einzelnen Bahnpunkte vor der Ansteuerung der achsenbezogenen Regler gefiltert, um die Achsenkoordinaten zu glätten. Bei dieser Filterung kann beispielsweise ein Mittelwert oder ein gewichteter Mittelwert gebildet werden. Weiterhin kann die Filterung durch ein phasenanhebendes Filter oder durch ein FIR-Filter (FIR: Finite Impulse Response) erfolgen. Andere mögliche Filtertypen zur Filterung der korrigierten Achsenkoordinaten vor der Ansteuerung der achsenbezogenen Regler sind Bandpassfilter oder Tiefpassfilter.

Ferner ist zu erwähnen, dass die Erfindung nicht auf das vorstehend beschriebene Steuerungsverfahren beschränkt ist, sondern hardwarebezogen auch eine Robotersteuerung umfasst, die zur Ausführung dieses Steuerungsverfahrens geeignet und entsprechend eingerichtet ist.

Schließlich umfasst die Erfindung auch einen mehrachsigen Roboter, insbesondere einen Lackierroboter, der von einer derartigen Robotersteuerung entsprechend dem erfindungsgemäßen Steuerungsverfahren angesteuert wird.

Andere Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

Figur 1    eine schematische Darstellung einer erfindungsgemäßen Robotersteuerung zur Ansteue- rung eines mehrachsigen Lackierroboters,

Figuren 2A und 2B  das erfindungsgemäße Steuerungsverfahren in Form eines Flussdiagramms,

Figur 3    die Recheneinheit der Robotersteuerung aus Figur 1 zur Berechnung der Bahnkorrektur- werte aus den inneren Drehmomentwerten,

Figur 4    ein Diagramm zur Berechnung der inneren Reibung in Abhängigkeit von der zeitlichen Ableitung der Achsenkoordinaten,

Figur 5    eine schematische Darstellung zur Bestim- mung der Modellparameter des dynamischen Robotermodells im Rahmen eines Kalibrie- rungsprozesses,

Figur 6    eine Abwandlung der Darstellung aus Figur 5, bei der die Modellparameter in anderer Weise berechnet werden sowie

Figur 7          eine Abwandlung der Darstellung aus Figur 5, bei der eine Roboterachse zur Ermitt- lung der Modellparameter des dynamischen Robotermodells festgebremst wird.

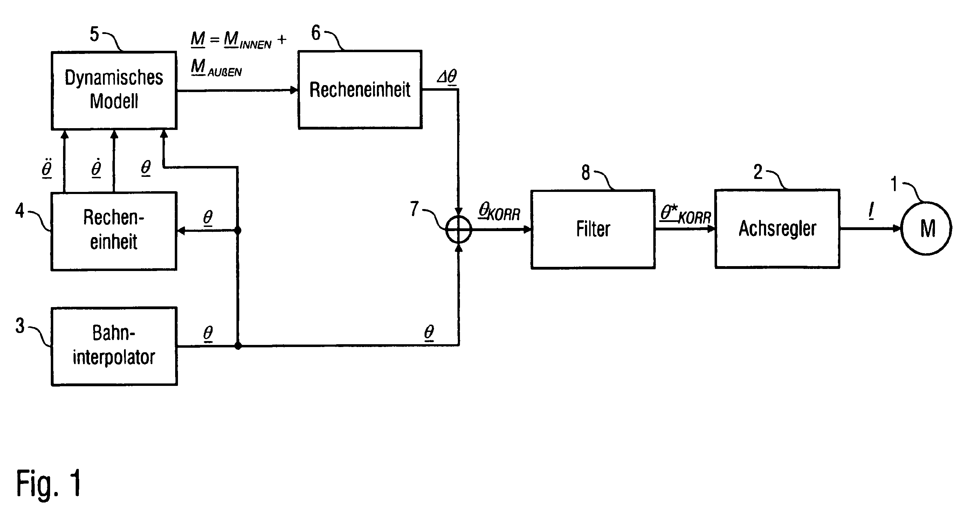

Die Zeichnung in Figur 1 zeigt eine vereinfachte, schematische Darstellung einer erfindungsgemäßen Robotersteuerung zur Ansteuerung eines mehrachsigen Lackierroboters.

Hierbei werden die einzelnen Roboterachsen durch Antriebsmotoren 1 angetrieben, was an sich aus der bereits eingangs zitierten Patentanmeldung DE 103 42 471 A1 bekannt ist.

Die Antriebsmotoren 1 in den einzelnen Roboterachsen werden hierbei von jeweils einem Achsregler 2 für die einzelnen Roboterachsen mit einem vorgegebenen Stromwert $\underline{I}$ angesteuert, wobei die unterstrichenen Werte hierbei und im Folgenden jeweils Vektoren kennzeichnen, die für die einzelnen Roboterachsen jeweils eine Komponente enthalten.

Weiterhin weist die erfindungsgemäße Robotersteuerung einen Bahninterpolator 3 auf, der als Eingangsgröße eine vorgegebene Roboterbahn durch mehrere Bahnpunkte erhält, wobei die einzelnen Bahnpunkte von dem Tool Center Point (TCP) des Lackierroboters durchfahren werden sollen und jeweils durch einen dreidimensionalen Positionsvektor definiert werden, wobei die einzelnen Komponenten des Positionsvektors die Raumkoordinaten der Bahnpunkte in einem dreidimensionalen, kartesischen Koordinatensystem wiedergeben.

Der Bahninterpolator 3 rechnet die Raumkoordinaten der einzelnen Bahnpunkte der vorgegebenen Roboterbahn dann gemäß einer vorgegebenen inversen Roboterkinematik in Achsenkoordinaten um, welche die Stellung der einzelnen Roboterachsen des Lackierroboters in den jeweiligen Bahnpunkten der vorgegebenen Roboterbahn wiedergeben. Der Bahninterpolator gibt also einen mehrdimensionalen Positionsvektor $\underline{\theta}$ aus, wobei die Anzahl der Dimensionen des Positionsvektors $\underline{\theta}$ der Anzahl der Roboterachsen entspricht, so dass die einzelnen Komponenten $q_i$ des Positionsvektors $\underline{\theta}$ die Stellungen der einzelnen Roboterachsen des Lackierroboters in den jeweiligen Bahnpunkten wiedergeben.

Der Positionsvektor $\underline{\theta}$ wird dann einer Recheneinheit 4 zugeführt, die die erste zeitliche Ableitung $d\underline{\theta}/dt$ und die zweite zeitliche Ableitung $d\underline{\theta}^2/dt^2$ des Positionsvektors $\underline{\theta}$ berechnet, d.h. die Geschwindigkeit und die Beschleunigung in dem Achsenkoordinatensystem.

Weiterhin weist die Robotersteuerung ein in Software realisiertes dynamisches Robotermodell 5 auf, das aus dem achsenbezogenen Positionsvektor $\underline{\theta}$, der ersten zeitlichen Ableitung $d\underline{\theta}/dt$ und der zweiten zeitlichen Ableitung $d\underline{\theta}^2/dt^2$ des Positionsvektors $\underline{\theta}$ einen Momentenvektor $\underline{M}$ berechnet, der aus der Summe aus dem äußeren Drehmoment $\underline{M}_{AUßEN}$ und dem inneren Drehmoment $\underline{M}_{INNEN}$ besteht, wobei das innere Drehmoment $\underline{M}_{INNEN}$ die Reibung und Trägheit in den einzelnen Roboterachsen berücksichtigt und nach folgender Formel berechnet werden:

$$M_{INNEN,i} = f_i^{sta} \cdot sgn(q_i) + f^{vis} \cdot \dot{q}_i + J_i \cdot \ddot{q}_i$$

Der *Momentenvektor* $\underline{M} = \underline{M}_{INNEN} + \underline{M}_{AUßEN}$ wird dann einer Recheneinheit 6 zugeführt, die aus dem Momentenvektor $\underline{M}$ einen Bahnkorrekturvektor $\Delta\underline{\theta}$ berechnet, der anschließend zur Bahnkorrektur verwendet wird, wie noch detailliert beschrieben wird. Der Bahnkorrekturvektor $\Delta\underline{\theta}$ wird hierbei nach folgender Formel aus dem Momentenvektor $\underline{M}$ berechnet:

$$\Delta\theta_i(s) = \frac{M_i}{s^2 \cdot \theta + s \cdot D + K} .$$

Der unkorrigierte Positionsvektor $\underline{\theta}$ wird dann zusammen mit dem Bahnkorrekturvektor $\Delta\underline{\theta}$ einem Addierer 7 zugeführt, der einen korrigierten Positionsvektor $\underline{\theta}_{KORR}$ berechnet, wobei der korrigierte Positionsvektor $\underline{\theta}_{KORR}$ dynamische Bahnabweichungen bei der Robotersteuerung kompensiert.

Der korrigierte Positionsvektor $\underline{\theta}_{KORR}$ wird dann einem Filter 8 zugeführt, das den Positionsvektor $\underline{\theta}_{KORR}$ filtert, um den Positionsvektor $\underline{\theta}_{KORR}$ zu glätten. Das Filter 8 gibt also einen geglätteten Positionsvektor $\underline{\theta}^*_{KORR}$ aus, wobei die einzelnen Komponenten des korrigierten und geglätteten Positionsvektors $\underline{\theta}^*_{KORR}$ den einzelnen Achsreglern 2 für die einzelnen Roboterachsen zugeführt werden.

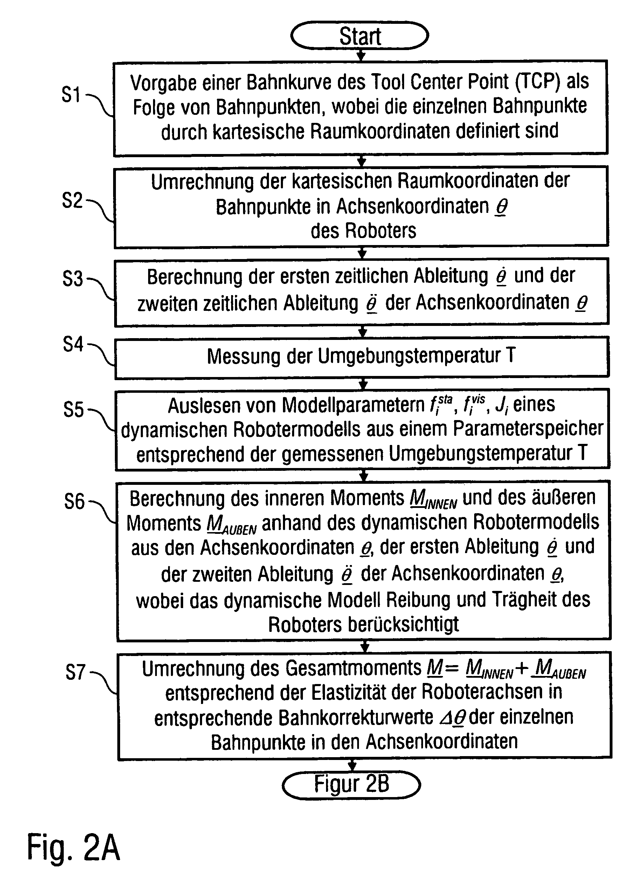

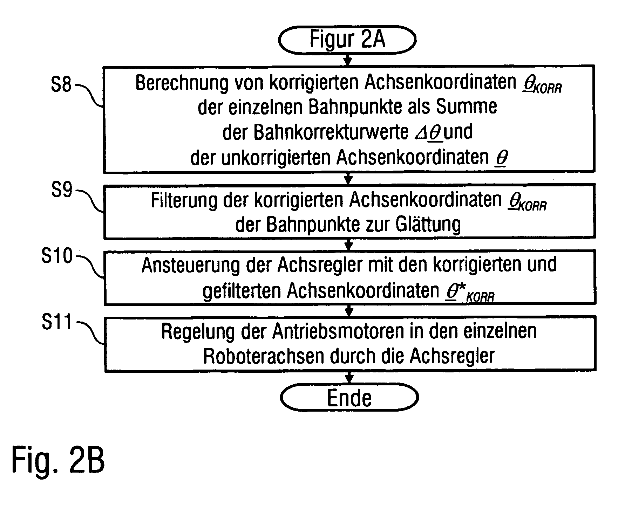

Das Flussdiagramm in den Figuren 2A und 2B verdeutlicht das Betriebsverfahren der vorstehend beschriebenen Robotersteuerung.

In einem ersten Schritt S1 wird für den Bahninterpolator 3 eine Bahnkurve aus mehreren Bahnpunkten vorgegeben, die von dem Tool Center Point (TCP) des Lackierroboters nacheinander durchfahren werden sollen, wobei die einzelnen Bahnpunkte der vorgegebenen Bahnkurve durch kartesische Raumkoordinaten definiert sind.

Die Raumkoordinaten der einzelnen Bahnpunkte werden dann von dem Bahninterpolator 3 in einem Schritt S2 in entsprechende Achsenkoordinaten $\underline{\theta}$ umgerechnet, wobei die Achsenkoordinaten die Stellung der einzelnen Roboterachsen in den einzelnen Bahnpunkten wiedergeben.

In einem weiteren Schritt S3 berechnet dann die Recheneinheit 4 die erste zeitliche Ableitung $d\underline{\theta}/dt$ und die zweite zeitliche Ableitung $d\underline{\theta}^2/dt^2$ des Positionsvektors $\underline{\theta}$ in den Achsenkoordinaten.

Weiterhin wird in einem Schritt S4 die Umgebungstemperatur $T$ gemessen, da das dynamische Robotermodell 5 temperaturabhängig ist, wie noch detailliert beschrieben wird.

Der Schritt S5 sieht dann vor, dass in Abhängigkeit von der zuvor gemessenen Umgebungstemperatur $T$ dann Modellparameter des dynamischen Robotermodells 5 aus einem Parameterspeicher ausgelesen werden, wobei es sich bei den Modellparametern um eine statische Reibungskonstante $f_i^{sta}$, eine dynamische Reibungskonstante $f_i^{vis}$ und eine Trägheitskonstante $J_i$ handelt.

In ,einem Schritt S6 wird dann in dem dynamischen Robotermodell 5 das Gesamtmoment $\underline{M}$ als Summe aus dem inneren Moment $\underline{M}_{INNEN}$ und dem äußeren Moment $\underline{M}_{AUßEN}$ berechnet, um Reibung und Trägheit des Roboters zu berücksichtigen.

Schritt S7 sieht dann vor, dass das entsprechend dem dynamischen Robotermodell berechnete Gesamtmoment $\underline{M}$ entsprechend der Elastizität der Roboterachsen in entsprechende Bahnkorrekturwerte $\Delta\underline{\theta}$ für die einzelnen Bahnpunkte in den Achsenkoordinaten umgerechnet wird.

In dem Schritt S8 werden dann die korrigierten Achsenkoordinaten $\underline{\theta}_{KORR}$ der einzelnen Bahnpunkte berechnet, indem der Addierer 7 die Bahnkorrekturwerte $\Delta\underline{\theta}$ zu den unkorrigierten Achsenkoordinaten $\underline{\theta}$ addiert.

Weiterhin sieht der Schritt S9 vor, dass die korrigierten Achsenkoordinaten $\underline{\theta}_{KORR}$ von dem Filter 8 zu Glättungszwecken gefiltert werden.

Ferner erfolgt in dem Schritt S10 eine Ansteuerung der einzelnen Achsregler 2 mit den korrigierten und gefilterten Achsenkoordinaten $\underline{\theta}^*_{KORR}$.

Schließlich erfolgt dann in Schritt S11 eine Regelung der einzelnen Antriebsmotoren 1 in den einzelnen Achsen durch die Achsregler 2.

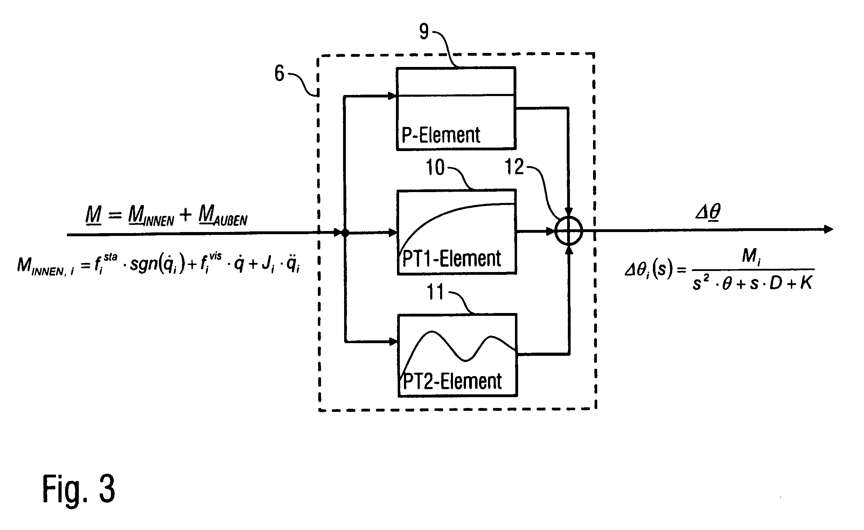

Figur 3 zeigt ein Ausführungsbeispiel für die Recheneinheit 6 aus Figur 1, die aus dem Momentenvektor $\underline{M}$ den Bahnkorrekturvektor $\Delta\underline{\theta}$ berechnet. In diesem Ausführungsbeispiel besteht die Recheneinheit 6 aus einem P-Element 9, einem PT1-Element 10, einem PT2-Element 11 und einem Addierer 12, wobei das P-Element 9, das PT1-Element 10 und das PT2-Element 11 eingangsseitig den Momentenvektor $\underline{M}$ aufnehmen und ausgangsseitig mit dem Addierer 12 verbunden sind, der die Ausgangssignale des P-Elements 9 des PT1-Elements 10 und des PT2-Elements 11 addiert, um den Bahnkorrekturvektor $\Delta\underline{\theta}$ zu berechnen.

Das P-Element ist an sich aus dem Stand der Technik bekannt und wird auch als P-Glied bezeichnet. Das P-Element 9 weist also ein proportionales Übertragungsverhalten auf.

Das PT1-Element 10 ist an sich ebenfalls aus dem Stand der Technik bekannt und weist ein proportionales Übertragungsverhalten mit einer Verzögerung erster Ordnung auf.

Schließlich ist auch das PT2-Element 11 aus dem Stand der Technik an sich bekannt und verfügt über ein proportionales Übertragungsverhalten mit einer Verzögerung zweiter Ordnung.

Die einzelnen Komponenten $\Delta\underline{\theta}_i$ des Bahnkorrekturvektors $\Delta\underline{\theta}$ werden also von der Recheneinheit 6 nach folgender Übertragungsfunktion berechnet:

$$\Delta\theta_i(s) = \frac{M_i}{s^2 \cdot \theta + s \cdot D + K}.$$

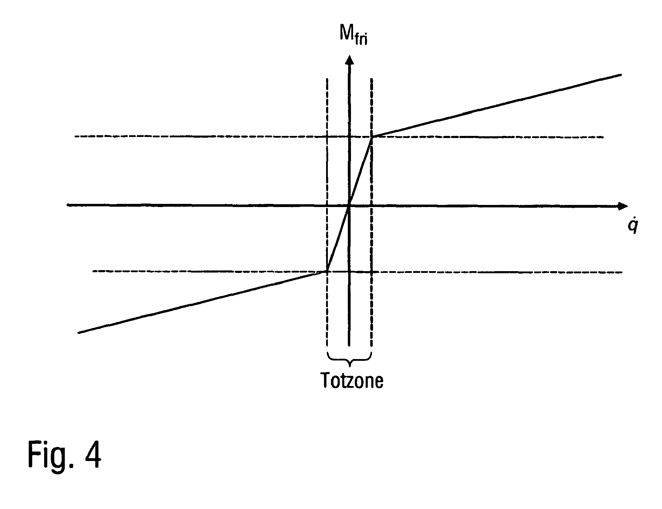

Figur 4 zeigt ein Diagramm zur Berechnung des inneren Moments $M_{fri}$ in Abhängigkeit von der ersten zeitlichen Ableitung $\dot{q}$ der Achsenkoordinaten. Daraus ist ersichtlich, dass das Reibmoment $M_{fri}$ in einer Totzone um den Nullpunkt gesondert behandelt wird, indem die Werte des Reibmoments $M_{fric}$ zwischen Anfang und Ende der Totzone linear interpoliert werden.

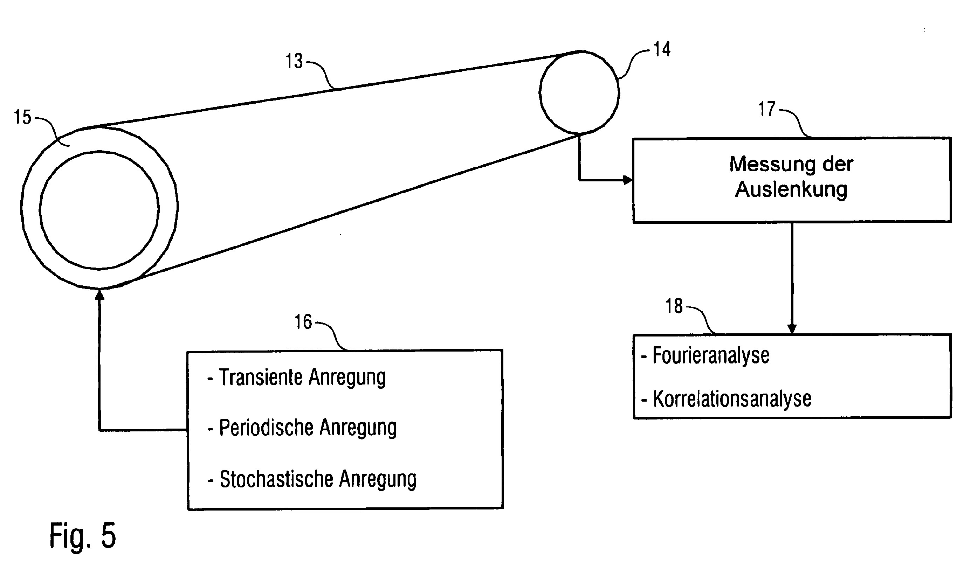

Figur 5 zeigt eine vereinfachte Darstellung zur Berechnung der vorstehend erwähnten Modellparameter des dynamischen Robotermodells. Hierbei ist exemplarisch nur eine einzige Roboterachse 13 mit einem Endeffektor 14 und einem Getriebeanschluss 15 dargestellt.

Der Getriebeanschluss 15 kann mittels eines Antriebsmotors über eine Anregungseinheit 16 transient, periodisch oder stochastisch angeregt werden.

An dem Endeffektor 14 wird dann von einer Messeinheit 17 die Auslenkung gemessen und an eine Auswertungseinheit 18 weitergeleitet, wobei die Auswertungseinheit 18 die gemessene Auslenkung des Endeffektors einer Fourieranalyse oder einer Korrelationsanalyse unterzieht, um das mechanische Übertragungsverhalten der Roboterachse 13 zu berechnen.

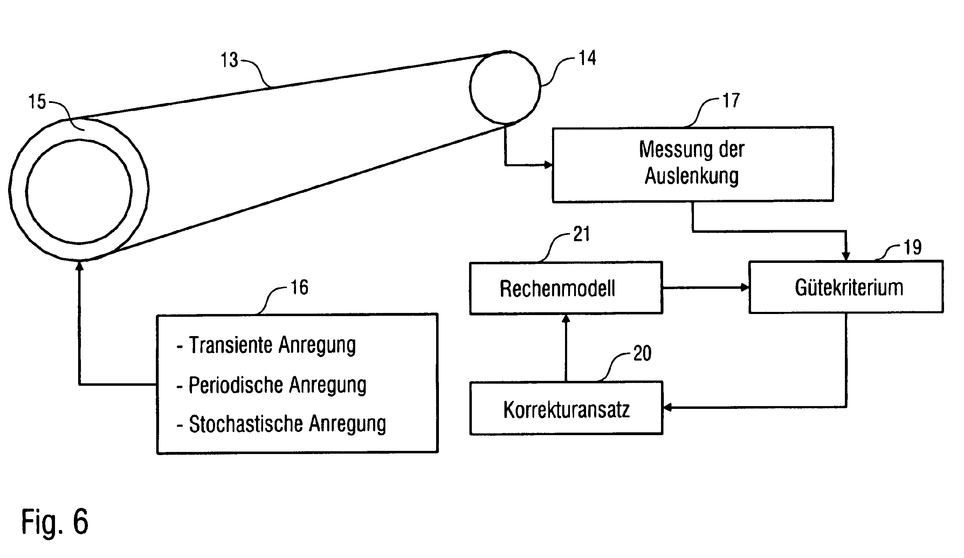

Die Darstellung in Figur 6 stimmt weitgehend mit der Darstellung in Figur 5 überein, so dass zur Vermeidung von Wiederholungen auf die vorstehende Beschreibung zu Figur 5 verwiesen wird.

Eine Besonderheit dieses Ausführungsbeispiels besteht darin, dass die Messeinheit 17 ausgangsseitig mit einer Bewertungseinheit 19 verbunden ist, die die gemessene Auslenkung mit einem Gütekriterium vergleicht und einen Korrekturansatz in einer Korrektureinheit 20 entsprechend anpasst. Die Korrektureinheit 20 ist wiederum mit einem Rechenmodell 21 verbunden, welches das Gütekriterium in der Bewertungseinheit 19 beeinflusst.

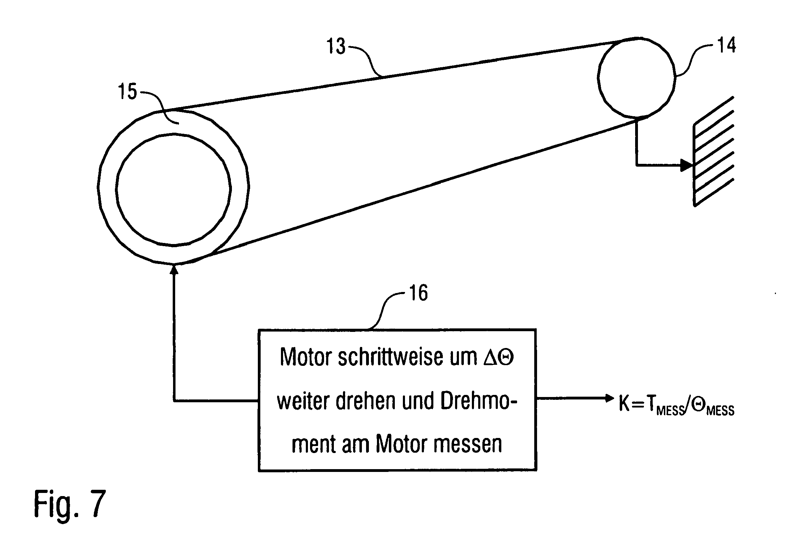

Schließlich zeigt Figur 7 eine Abwandlung von Figur 5, wobei der Endeffektor 14 hierbei festgebremst wird. Die Anregungseinheit 16 dreht den Antriebsmotor hierbei schrittweise weiter und misst dabei das Drehmoment an dem Antriebsmotor, um daraus die Federsteifigkeit der Achse 13 zu berechnen.

Die Erfindung ist nicht auf die vorstehend beschriebenen bevorzugten Ausführungsbeispiels beschränkt. Vielmehr ist eine Vielzahl von Varianten und Abwandlungen möglich, die von dem Erfindungsgedanken Gebrauch machen und deshalb in den Schutzbereich fallen.

**Bezugszeichenliste:**

| | |
|---|---|
| 1 | Antriebsmotoren |
| 2 | Achsregler |
| 3 | Bahninterpolator |
| 4 | Recheneinheit |
| 5 | Robotermodell |
| 6 | Recheneinheit |
| 7 | Addierer |
| 8 | Filter |
| 9 | P-Element |
| 10 | PT1-Element |
| 11 | PT2-Element |
| 12 | Addierer |
| 13 | Roboterachse |
| 14 | Endeffektor |
| 15 | Getriebeanschluss |
| 16 | Anregungseinheit |
| 17 | Messeinheit |
| 18 | Auswertungseinheit |
| 19 | Bewertungseinheit |

20 Korrektureinheit

21 Rechenmodell

**Patentansprüche**

**1.** Steuerungsverfahren für einen mehrachsigen Roboter, insbesondere für einen Lackierroboter, mit den folgenden Schritten:

a) Vorgabe (S1) einer Roboterbahn durch mehrere Bahnpunkte, die von einem Referenzpunkt des Roboters durchfahren werden sollen, wobei die einzelnen Bahnpunkte jeweils durch Raumkoordinaten definiert sind,
b) Umrechnung (S2) der Raumkoordinaten der einzelnen Bahnpunkte gemäß einer inversen Roboterkinematik in entsprechende Achsenkoordinaten ($\underline{\theta}$), wobei die Achsenkoordinaten ($\underline{\theta}$) die Stellung der einzelnen Roboterachsen in den jeweiligen Bahnpunkten wiedergeben,
c) Ansteuerung (S10) von achsenbezogenen Reglern (2) für die einzelnen Roboterachsen entsprechend den umgerechneten Achsenkoordinaten ($\underline{\theta}$),
d) Ansteuerung (S11) von achsenbezogenen Antriebsmotoren (1) in den einzelnen Roboterachsen durch die zugehörigen achsenbezogenen Regler (2),
e) Berechnung (S3-S7) von Bahnkorrekturwerten ($\Delta\underline{\theta}$) für die einzelnen Bahnpunkte auf der Roboterbahn gemäß einem dynamischen Robotermodell (5), wobei die Bahnkorrekturwerte ($\Delta\underline{\theta}$) Elastizität und/oder Reibung und/oder Trägheit des Roboters berücksichtigen,
f) Berechnung (S8) korrigierter Achsenkoordinaten *($\Delta\underline{\theta}_{KORR}$)* für die einzelnen Bahnpunkte aus den unkorrigierten Achsenkoordinaten ($\underline{\theta}$) der einzelnen Bahnpunkte und den Bahnkorrekturwerten ($\Delta\underline{\theta}$), und
g) Ansteuerung (S10) der achsenbezogenen Regler (2) mit den korrigierten Achsenkoordinaten *($\Delta\underline{\theta}_{KORR}$)*,

**gekennzeichnet durch** folgende Schritte:

h) Berechnung (S6) von inneren Drehmomentwerten *($\underline{M}_{INNEN}$)* und/oder äußeren Drehmomentwerten *($\underline{M}_{AUßEN}$)* aus den unkorrigierten Achsenkoordinaten ($\theta$) der Bahnpunkte gemäß dem dynamischen Robotermodell (5),

h1) wobei die inneren Drehmomentwerte *($\underline{M}_{INNEN}$)* das innere Drehmoment der Antriebsmotoren (1) und der zugehörigen Roboterachsen wiedergeben,
h2) während die inneren Drehmomentwerte *($\underline{M}_{INNEN}$)* einen statischen Reibungsterm, einen dynamischen Reibungsterm und/oder einen Trägheitsterm enthalten,

i) Berechnung (S7) der Bahnkorrekturwerte ($\Delta\underline{\theta}$) aus den inneren Drehmomentwerten *($\underline{M}_{INNEN}$)* und den äußeren Drehmomentwerten *($\underline{M}_{AUßEN}$)*.

**2.** Steuerungsverfahren nach Anspruch 1, **dadurch gekennzeichnet, dass** die inneren Drehmomentwerte *($\underline{M}_{INNEN}$, $M_{INNEN,i}$)* folgende Anteile enthalten:

a) den statischen Reibungsterm, der aus dem Vorzeichen der ersten zeitlichen Ableitung *($\dot{q}_i$)* der unkorrigierten Achsenkoordinaten ($\underline{\theta}$) der Bahnpunkte und einer statischen Reibungskonstanten *($f_i^{sta}$)* berechnet wird, und/oder
b) den dynamischen Reibungsterm, der aus der ersten zeitlichen Ableitung *($\dot{q}_i$)* der unkorrigierten Achsenkoordinaten ($\underline{\theta}$) der Bahnpunkte und einer dynamischen Reibungskonstanten *($f_i^{vis}$)* berechnet wird, und/oder
c) den Trägheitsterm, der aus der zweiten zeitlichen Ableitung *($\ddot{q}_i$)* der unkorrigierten Achsenkoordinaten ($\underline{\theta}$) der Bahnpunkte und einer Trägheitskonstanten *($J_i$)* berechnet wird.

**3.** Steuerungsverfahren nach einem der vorhergehenden Ansprüche,
**gekennzeichnet durch** folgende Schritte:

a) Messung (S4) einer Umgebungstemperatur (*T*),
b) Auslesen (S5) von Modellparametern *($f_i^{sta}$, $f_i^{vis}$, $J_i$)* des dynamischen Robotermodells entsprechend der gemessenen Umgebungstemperatur (*T*) aus einem Parameterspeicher,
c) Berechnung (S7) der Bahnkorrekturwerte ($\Delta\underline{\theta}$) mit den ausgelesenen Modellparametern *($f_i^{sta}$, $f_i^{vis}$, $J_i$)* des dynamischen Robotermodells.

**4.** Steuerungsverfahren nach Anspruch 2 und Anspruch 3, **dadurch gekennzeichnet, dass** die temperaturabhängig ausgelesenen Modellparameter folgende Größen umfassen:

a) die statische Reibungskonstante ($f_i^{sta}$) und/oder
b) die dynamische Reibungskonstante ($f_i^{vis}$) und/oder
c) die Trägheitskonstante ($J_i$).

**5.** Steuerungsverfahren nach einem der vorhergehenden Ansprüche, **dadurch gekennzeichnet, dass** die Bahnkorrekturwerte ($\Delta\underline{\theta}$) aus den inneren Drehmomentwerten ($\underline{M}_{INNEN}$) und/oder den äußeren Drehmomentwerten ($\underline{M}_{AUßEN}$) berechnet werden mittels

a) eines P-Glieds (9), und/oder
b) eines PT1-Glieds (10), und/oder
c) eines PT2-Glieds (11).

**6.** Steuerungsverfahren nach einem der vorhergehenden Ansprüche, **dadurch gekennzeichnet, dass** die Bahnkorrekturwerte ($\Delta\underline{\theta}$) unter Berücksichtigung der Elastizität der Roboterachsen aus den inneren Drehmomentwerten ($\underline{M}_{INNEN}$) und/oder den äußeren Drehmomentwerten ($\underline{M}_{AUßEN}$) berechnet werden.

**7.** Steuerungsverfahren nach einem der vorhergehenden Ansprüche, **gekennzeichnet durch** folgenden Schritt:

Filterung (S9) der korrigierten Achsenkoordinaten ($\Delta\underline{\theta}_{KORR}$) der Bahnpunkte vor der Ansteuerung der achsenbezogenen Regler (2) zur Glättung der Korrektur.

**8.** Steuerungsverfahren nach Anspruch 7, **dadurch gekennzeichnet, dass** die korrigierten Achsenkoordinaten ($\Delta\underline{\theta}_{KORR}$) durch folgenden Filtertyp gefiltert werden:

a) Mittelwertfilter,
b) Mittelwertfilter, der einen gewichteten Mittelwert bestimmt,
c) Phasenanhebendes Filter,
d) FIR-Filter,
e) Bandpassfilter und/oder
f) Tiefpassfilter.

**9.** Steuerungsverfahren nach einem der vorhergehenden Ansprüche, **dadurch gekennzeichnet, dass** die Bahnkorrekturwerte ($\Delta\underline{\theta}$) bei der Korrektur zu den unkorrigierten Achsenkoordinaten ($\underline{\theta}$) der Bahnpunkte addiert werden.

**10.** Robotersteuerung, die zum Ausführen eines Steuerungsverfahrens nach einem der vorhergehenden Ansprüche eingerichtet ist.

**11.** Roboter, insbesondere Lackierroboter, mit einer Robotersteuerung nach Anspruch 10.

**Claims**

**1.** A control method for a multiaxial robot, in particular for a painting robot, having the following steps:

a) predetermination (S1) of a robot path through a plurality of path points, which are intended to be traversed by a reference point of the robot, the individual path points being defined in each case by spatial coordinates,
b) conversion (S2) of the spatial coordinates of the individual path points in accordance with inverse robot kinematics into corresponding axis coordinates ($\underline{\theta}$), the axis coordinates ($\underline{\theta}$) representing the position of the individual robot axes at the respective path points,
c) actuation (S10) of axis-related controllers (2) for the individual robot axes in accordance with the converted axis coordinates ($\underline{\theta}$),
d) actuation (S11) of axis-related drive motors (1) in the individual robot axes by the associated axis-related controllers (2),
e) calculation (S3-S7) of path correction values ($\Delta\underline{\theta}$) for the individual path points on the robot path in accordance with a dynamic robot model (5), the path correction values ($\Delta\underline{\theta}$) taking account of the elasticity and/or friction and/or inertia of the robot,

f) calculation (S8) of corrected axis coordinates $(\Delta\underline{\theta}_{CORR})$ for the individual path points from the uncorrected axis coordinates $(\underline{\theta})$ of the individual path points and the path correction values $(\Delta\underline{\theta})$, and

g) actuation (S10) of the axis-related controllers (2) with the corrected axis coordinates $(\Delta\underline{\theta}_{CORR})$,

**characterised by** the following steps:

h) calculation (S6) of internal torque values $(\underline{M}_{INT})$ and/or external torque values $(\underline{M}_{EXT})$ from the uncorrected axis coordinates $(\underline{\theta})$ of the path points in accordance with the dynamic robot model (5),

h1) wherein the internal torque values $(\underline{M}_{INT})$ represent the internal torque of the drive motors (1) and the associated robot axes,

h2) while the internal torque values $(\underline{M}_{INT}, M_{INT,i})$ contain a static friction term, a dynamic friction term and/or an inertia term,

i) calculation (S7) of the path correction values $(\Delta\underline{\theta})$ from the internal torque values $(\underline{M}_{INT})$ and the external torque values $(\underline{M}_{EXT})$.

2. The control method according to claim 1, **characterised in that** the internal torque values $(\underline{M}_{INT}, M_{INT, i})$ contain the following components:

a) the static friction term, which is calculated from the sign of the uncorrected axis coordinates $(\underline{\theta})$ of the path points and a static friction constant $(f_i^{sta})$, and/or

a) the dynamic friction term, which is calculated from the first time derivative $(\dot{q}_i)$ of the uncorrected axis coordinates $(\underline{\theta})$ of the path points and a dynamic friction constant $(f_i^{vis})$, and/or

c) the inertia term, which is calculated from the second time derivative $(\ddot{q}_i)$ of the uncorrected axis coordinates $(\underline{\theta})$ of the path points and an inertia constant $(J_i)$.

3. The control method according to any one of the preceding claims, **characterised by** the following steps:

a) measurement (S4) of an ambient temperature $(T)$,

b) reading out (S5) from a parameter memory of model parameters $(f_i^{sta}, f_i^{vis}, J_i)$ of the dynamic robot model corresponding to the measured ambient temperature $(T)$,

c) calculation (S7) of the path correction values $(\Delta\underline{\theta})$ with the read-out model parameters $(f_i^{sta}, f_i^{vis}, J_i)$ of the dynamic robot model.

4. The control method according to claim 2 and claim 2, **characterised in that** the temperature-dependently read-out model parameters comprise the following quantities:

a) the static friction constant $(f_i^{sta})$ and/or

b) the dynamic friction constant $(f_i^{vis})$ and/or

c) the inertia constant $(J_i)$.

5. The control method according to any of the preceding claims, **characterised in that** the path correction values $(\Delta\underline{\theta})$ are calculated from the internal torque values $(\underline{M}_{INT})$ and/or the external torque values $(\underline{M}_{EXT})$ by means of

a) a P element (9), and/or

b) a PT1 element (10), and/or

c) a PT2 element (11).

6. The control method according to any of the preceding claims, **characterised in that** the path correction values $(\Delta\underline{\theta})$ are calculated, taking account of the elasticity of the robot axes, from the internal torque values $(\underline{M}_{INT})$ and/or the external torque values $(\underline{M}_{EXT})$.

7. The control method according to any of the preceding claims, **characterised by** the following step:

filtering (S9) of the corrected axis coordinates $(\Delta\underline{\theta}_{CORR})$ of the path points prior to actuation of the axis-related controllers (2) for smoothing purposes.

8.  The control method according to claim 7, **characterised in that** the corrected axis coordinates ($\Delta\underline{\theta}_{CORR}$) are filtered by the following filter type:

    a) average filter,
    b) average filter, which determines a weighted average,
    c) phase-lead filter,
    d) FIR filter,
    e) bandpass filter and/or
    f) low-pass filter.

9.  The control method according to any of the preceding claims, **characterised in that** the path correction values ($\Delta\underline{\theta}$) are added to the uncorrected axis coordinates ($\underline{\theta}$) of the path points on correction.

10. A robot control system, which is set up to perform a control method according to any one of the preceding claims.

11. The robot, in particular painting robot, having a robot control system according to claim 10.


**Revendications**

1.  Procédé de commande pour un robot multiaxe, en particulier pour un robot de laquage, comprenant les étapes suivantes :

    a) spécification (S1) d'une bande de robot par plusieurs points de bande, qui doivent être parcourus par un point de référence du robot, les points de bande individuels étant définis respectivement par des coordonnées spatiales,
    b) conversion (S2) des coordonnées spatiales des points de bande individuels selon une cinématique de robot inverse en coordonnées d'axes ($\underline{\theta}$) correspondantes, les coordonnées d'axes ($\underline{\theta}$) restituant la position des axes de robot individuels aux points de bande respectifs,
    c) activation (S10) de régulateurs (2) spécifiques aux axes pour les axes de robot individuels en fonction des coordonnées d'axes ($\underline{\theta}$) converties,
    d) activation (S11) de moteurs d'entraînement (1) spécifiques aux axes dans les axes de robot individuels par les régulateurs (2) correspondants spécifiques aux axes,
    e) calcul (S3-S7) de valeurs de correction de bande ($\Delta\underline{\theta}$) pour les points de bande individuels sur la bande de robot selon un modèle de robot (5) dynamique, les valeurs de correction de bande ($\Delta\underline{\theta}$) tenant en compte de l'élasticité et/ou du frottement et/ou de l'inertie du robot,
    f) calcul (S8) de coordonnées d'axes corrigées ($\Delta\underline{\theta}_{korr}$) pour les points de bande individuels à partir des coordonnées d'axes ($\underline{\theta}$) non corrigées des points de bande individuels et des valeurs de correction de bande ($\Delta\underline{\theta}$), et
    g) activation (S10) des régulateurs (2) spécifiques aux axes avec les coordonnées d'axes corrigées ($\Delta\underline{\theta}_{korr}$),

    **caractérisé par** les étapes suivantes

    h) calcul (S6) de valeurs de couple internes ($\underline{M}_{innen}$) et/ou de valeurs de couple externes ($\underline{M}_{aussen}$) à partir des coordonnées d'axes ($\underline{\theta}$) non corrigées des points de bande selon le modèle de robot (5) dynamique,

    h1) les valeurs de couple internes ($\underline{M}_{innen}$) restituant le couple interne des moteurs d'entraînement (1) et des axes de robot spécifiques,
    h2) alors que les valeurs de couple interne ($\underline{M}_{innen}$) contiennent un terme de frottement statique, un terme de frottement dynamique et/ou un terme d'inertie,

    i) calcul (S7) des valeurs de correction de bande ($\Delta\underline{\theta}$) à partir des valeurs de couple internes ($\underline{M}_{innen}$) et des valeurs de couple externes ($\underline{M}_{aussen}$).

2.  Procédé de commande selon la revendication 1, **caractérisé en ce que** les valeurs de couple internes ($\underline{M}_{innen}$, $\underline{M}_{innen,\,1}$) contiennent les fractions suivantes :

    a) le terme de frottement statique, qui est calculé à partir du signe de la première dérivée dans le temps ($\dot{q}_i$) des coordonnées d'axes ($\underline{\theta}$) non corrigées des points de bande et d'une constante de frottement statique ($f_i^{stat}$)

et/ou

b) le terme de frottement dynamique, qui est calculé à partir de la première dérivée dans le temps ($\dot{q}_i$) des coordonnées d'axes ($\underline{\theta}$) non corrigées des points de bande et d'une constante de frottement dynamique (fi$^{vis}$) et/ ou

c) le terme d'inertie qui est calculé à partir de la seconde dérivée dans le temps ($\overline{q}_i$) des coordonnées d'axes ($\underline{\theta}$) non corrigées des points de bande et d'une constante d'inertie ($J_i$).

3. Procédé de commande selon l'une quelconque des revendications précédentes, **caractérisé par** les étapes suivantes :

   a) mesure (S4) d'une température ambiante (T),
   b) sélection (S5) de paramètres de modèle ($f_i{}^{sts}$, $f_i{}^{vis}$, $J_i$) du modèle de robot dynamique en fonction de la température ambiante (T) mesurée à partir d'une mémoire de paramètres,
   c) calcul (S7) des valeurs de correction de bande ($\Delta\underline{\theta}$) avec les paramètres de modèle ($f_i{}^{sts}$, $fi{}^{vis}$, $J_i$) sélectionnés du modèle de robot dynamique.

4. Procédé de commande selon les revendications 2 et 3, **caractérisé en ce que** les paramètres de modèle sélectionnés en fonction de la température comprennent les grandeurs suivantes :

   a) la constante de frottement statique (($f_i{}^{sts}$) et/ou
   b) la constante de frottement dynamique (($f_i{}^{vts}$) et/ ou
   c) la constante d'inertie ($J_i$).

5. Procédé de commande selon l'une quelconque des revendications précédentes, **caractérisé en ce que** les valeurs de correction de bande ($\Delta\underline{\theta}$) sont calculées à partir des valeurs de couple internes ($\underline{M}_{innen}$) et/ou des valeurs de couple externes ($\underline{M}_{aussen}$) au moyen

   a) d'un élément P (9), et/ou
   b) d'un élément PT1 (10), et/ou
   c) d'un élément PT2 (11).

6. Procédé de commande selon l'une quelconque des revendications précédentes, **caractérisé en ce que** les valeurs de correction de bande ($\Delta\underline{\theta}$) sont calculées en tenant compte de l'élasticité des axes de robot à partir des valeurs de couple internes ($\underline{M}_{innen}$) et/ou des valeurs de couple externes ($\underline{M}_{aussen}$).

7. Procédé de commande selon l'une quelconque des revendications précédentes, **caractérisé par** les étapes suivantes :

   filtrage (S9) des coordonnées d'axes corrigées ($\Delta\underline{\theta}_{korr}$) des points de bande avant l'activation des régulateurs (2) spécifiques aux axes pour le lissage de la correction.

8. Procédé de commande selon la revendication 7, **caractérisé en ce que** les coordonnées d'axes corrigées ($\Delta\underline{\theta}_{korr}$) sont filtrées par le type de filtre suivant :

   a) filtre de valeur moyenne,
   b) filtre de valeur moyenne qui détermine une valeur moyenne pondérée,
   c) filtre élevant la phase,
   d) filtre FIR,
   e) filtre passe-bande et/ou
   f) filtre passe-bas.

9. Procédé de commande selon l'une quelconque des revendications précédentes, **caractérisé en ce que** les valeurs de correction de bande ($\Delta\underline{\theta}$) sont additionnées lors de la correction aux coordonnées d'axes ($\underline{\theta}$) non corrigés des points de bande.

10. Commande de robot, qui est équipée pour la mise en oeuvre d'un procédé de commande selon l'une quelconque des revendications précédentes.

**11.** Robot, en particulier robot de laquage, comprenant une commande de robot selon la revendication 10.

Fig. 1

14

```
                    ┌─────────────┐
                    │    Start    │
                    └──────┬──────┘
                           ▼
        ┌──────────────────────────────────────────────┐
   S1   │ Vorgabe einer Bahnkurve des Tool Center Point │
        │ (TCP) als Folge von Bahnpunkten, wobei die    │
        │ einzelnen Bahnpunkte durch kartesische        │
        │ Raumkoordinaten definiert sind                │
        └──────────────────┬───────────────────────────┘
                           ▼
        ┌──────────────────────────────────────────────┐
   S2   │ Umrechnung der kartesischen Raumkoordinaten   │
        │ der Bahnpunkte in Achsenkoordinaten $\theta$  │
        │ des Roboters                                  │
        └──────────────────┬───────────────────────────┘
                           ▼
        ┌──────────────────────────────────────────────┐
   S3   │ Berechnung der ersten zeitlichen Ableitung    │
        │ $\dot{\theta}$ und der zweiten zeitlichen     │
        │ Ableitung $\ddot{\theta}$ der                 │
        │ Achsenkoordinaten $\theta$                    │
        └──────────────────┬───────────────────────────┘
                           ▼
        ┌──────────────────────────────────────────────┐
   S4   │       Messung der Umgebungstemperatur T       │
        └──────────────────┬───────────────────────────┘
                           ▼
        ┌──────────────────────────────────────────────┐
   S5   │ Auslesen von Modellparametern $f_i^{sta}$,    │
        │ $f_i^{vis}$, $J_i$ eines dynamischen          │
        │ Robotermodells aus einem Parameterspeicher    │
        │ entsprechend der gemessenen                   │
        │ Umgebungstemperatur T                         │
        └──────────────────┬───────────────────────────┘
                           ▼
        ┌──────────────────────────────────────────────┐
   S6   │ Berechnung des inneren Moments                │
        │ $\underline{M}_{INNEN}$ und des äußeren       │
        │ Moments $\underline{M}_{AUßEN}$ anhand des    │
        │ dynamischen Robotermodells aus den            │
        │ Achsenkoordinaten $\theta$, der ersten        │
        │ Ableitung $\dot{\theta}$ und der zweiten      │
        │ Ableitung $\ddot{\theta}$ der                 │
        │ Achsenkoordinaten $\theta$, wobei das         │
        │ dynamische Modell Reibung und Trägheit des    │
        │ Roboters berücksichtigt                       │
        └──────────────────┬───────────────────────────┘
                           ▼
        ┌──────────────────────────────────────────────┐
   S7   │ Umrechnung des Gesamtmoments                  │
        │ $\underline{M} = \underline{M}_{INNEN} +      │
        │ \underline{M}_{AUßEN}$ entsprechend der       │
        │ Elastizität der Roboterachsen in              │
        │ entsprechende Bahnkorrekturwerte              │
        │ $\Delta\theta$ der einzelnen Bahnpunkte in    │
        │ den Achsenkoordinaten                         │
        └──────────────────┬───────────────────────────┘
                           ▼
                    ┌─────────────┐
                    │  Figur 2B   │
                    └─────────────┘
```

# Fig. 2A

$$\boxed{\text{Figur 2A}}$$

S8 — Berechnung von korrigierten Achsenkoordinaten $\underline{\theta}_{KORR}$
der einzelnen Bahnpunkte als Summe
der Bahnkorrekturwerte $\Delta\underline{\theta}$ und
der unkorrigierten Achsenkoordinaten $\underline{\theta}$

S9 — Filterung der korrigierten Achsenkoordinaten $\underline{\theta}_{KORR}$
der Bahnpunkte zur Glättung

S10 — Ansteuerung der Achsregler mit den korrigierten und
gefilterten Achsenkoordinaten $\underline{\theta}^{*}_{KORR}$

S11 — Regelung der Antriebsmotoren in den einzelnen
Roboterachsen durch die Achsregler

$$\boxed{\text{Ende}}$$

# Fig. 2B

$$\underline{M} = \underline{M}_{INNEN} + \underline{M}_{AUBEN}$$

$$M_{INNEN,\,i} = f_i^{sta} \cdot sgn(\dot{q}_i) + f_i^{vis} \cdot \dot{q} + J_i \cdot \ddot{q}_i$$

P-Element

PT1-Element

PT2-Element

$$\Delta\underline{\theta}$$

$$\Delta\theta_i(s) = \frac{M_i}{s^2 \cdot \theta + s \cdot D + K}$$

Fig. 3

Fig. 4

Fig. 5

**15** **13** **14**

**17**
Messung der
Auslenkung

**16**
- Transiente Anregung
- Periodische Anregung
- Stochastische Anregung

**21**
Rechenmodell

**19**
Gütekriterium

**20**
Korrekturansatz

Fig. 6

EP 2 146 825 B1

Motor schrittweise um $\Delta\Theta$ weiter drehen und Drehmoment am Motor messen

$K = T_{MESS}/\Theta_{MESS}$

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10342471 A1
- US 20040093119 A1
- DE 102004056861 A1
- DE 69829559 T2
- DE 102004008406 A1
- EP 1173801 B1

### In der Beschreibung aufgeführte Nicht-Patentliteratur

- *Proceedings of the 2005 IEEE Conference on Control Algorithms,* 28. August 2005, 1170-1175
- *Proceedings of IFAC Symposium on Robot Control,* 19. September 1994, 485-490
- *Proceedings of the 1992 IEEE Conference on Robotics and Automation,* Mai 1992, 1429-1435
- *IEEE Transactions on Control Systems Technology,* November 2004, vol. 12 (6), 904-919